# EUROPÄISCHE PATENTSCHRIFT

(11) **EP 0 671 742 B1**
(45) Veröffentlichungstag und Bekanntmachung des Hinweises auf die Patenterteilung: **12.01.2000**
(21) Anmeldenummer: 95103711.8
(22) Anmeldetag: 28.05.1992
(51) Int. Cl.: G11B 27/36, G11B 20/18, G11B 27/34, G11B 7/00, G01N 21/88

(54) **Fehlerartsignalisation optischer Informationsträger**
Signalization of types of defects of an optical information carrier
Signalisation du type de défauts d'un support d'information optique

(30) Priorität: 07.06.1991 DE 4118672; 25.06.1991 DE 4120870; 28.03.1992 DE 4210264
(43) Veröffentlichungstag der Anmeldung: 13.09.1995
(62) Teilanmeldung aus: 92910751.4
(73) Patentinhaber: DEUTSCHE THOMSON-BRANDT GMBH, 78048 Villingen-Schwenningen (DE)
(72) Erfinder: Rutschmann, Richard, D-79793 Wutöschingen (DE); Läufer, Engelbert, D-78112 St. Georgen (DE); Kühn, Hans-Robert, D-78112 St. Georgen (DE)

(56) Entgegenhaltungen:
- EP-A- 0 073 519
- EP-A- 0 144 831
- DE-A- 2 851 822
- DE-A- 3 719 489
- GB-A- 2 137 799
- PATENT ABSTRACTS OF JAPAN vol. 11, no. 91 (P-558) 23. März 1987 & JP-A-61 242 347 (TOSHIBA CORP.) 28. Oktober 1986
- PATENT ABSTRACTS OF JAPAN vol. 8, no. 275 (P-321) 15. Dezember 1984 & JP-A-59 142 756 (SONY K.K.) 16. August 1984
- PATENT ABSTRACTS OF JAPAN vol. 13, no. 517 (P-962) 20. November 1989 & JP-A-01 209 344 (SEIKO EPSON K.K.) 23. August 1989
- ELEKTOR ELECTRONICS., Bd.15, Nr.171, Oktober 1989, CANTERBURY GB Seiten 12 - 15 GIFFARD 'CD ERROR DETECTOR'
- IBM TECHNICAL DISCLOSURE BULLETIN., Bd.31, Nr.8, Januar 1989, NEW YORK US Seiten 128 - 130 'MULTI-THRESHOLD SURFACE ANALYSIS TESTER'
- PATENT ABSTRACTS OF JAPAN vol. 9, no. 289 (P-405) (2012) 15. November 1985 & JP-A-60 127 574 (TOSHIBA K.K.) 8. Juli 1985
- KRIEG, BERNHARD 'PRAXIS DER DIGITALEN AUDIOTECHNIK: DIGITALE AUFNAHME UND WIEDERGABE' 1989 , FRANZIS-VERLAG , MÜNCHEN, DE * Seite 60 - Seite 63 *

## Beschreibung

Die Erfindung betrifft ein Verfahren und eine Anordnung zur Fehlerartsignalisation optischer Informationsträger mit einem Wiedergabegerät im Sinne einer "Fuzzy Logic", die nicht nur das Vorhandensein eines Fehlers, sondern die Art des Fehlers, wie zum Beispiel Fingerabdrücke auf einer Compact Disc, signalisiert und es dadurch dem Verbraucher gegebenenfalls ermöglicht, die ursprüngliche Wiedergabequalität des optischen Informationsträgers wiederherzustellen. Das Gebiet, dem die Erfindung zuzuordnen ist, betrifft das Signalisieren mindestens einer Fehlerart optischer Informationsträger, wie sie bei fahrlässigem Umgang mit der Compact Disc (CD), Laserdisc oder ähnlichen Informationsträgern auftreten, wobei das üblicherweise zur Wiedergabe der Information vorgesehene Abspielgerät verwendet wird.

Trotz größter Sorgfalt weisen zur Aufzeichnung und Wiedergabe von Audio- und/oder Videosignalen oder Datensignalen verwendete optische Informationsträger sowohl herstellungs- als auch umweltbedingte Fehler auf, die in gewissem Umfang mit einer Fehlerkorrektureinrichtung von den Abspielgeräten korrigiert bzw. interpoliert werden. Ohne diese Fähigkeit wären die Compact Disc oder Laserdisc nicht realisierbar, da dann keines der vielen Bits verlorengehen beziehungsweise keiner der unzähligen Pits in der Scheibe verschmiert oder verdeckt werden dürfte. Fehler des optischen Informationsträgers können jedoch zumindest die Originalität der Wiedergabe beeinflussen oder führen zu Ausfällen bei der Wiedergabe. Es treten sowohl zufällige Einzelfehler, wie Luftbläschen oder Verschmutzungen in der Schutzschicht des optischen Informationsträgers, als auch sogenannte Flächenfehler, also Kratzer und Fingerabdrücke auf, die sehr viele Informationen zerstören oder verdecken, so daß der Verbraucher nicht mehr unterscheiden kann, ob ursprüngliche oder berechnete beziehungsweise interpolierte Informationen wiedergegeben werden.

Zur Anzeige der technischen Qualität einer gerade gespielten CD ist ein Fehleranzeigegerät bekannt, das die Auslastung der Fehlerkorrektur anzeigt, vgl. KRIEG, Bernhard: Praxis der digitalen Audiotechnik: digitale Aufnahme und Wiedergabe, Franzis-Verlag GmbH, München 1989, S. 60 - 63. Die Auslastung der Fehlerkorrektur ist ein Spiegelbild des Fehlergrades des optischen Informationsträgers, den der im Abspielgerät vorhandene Program-Counter signalisiert. Der Fehlergrad repräsentiert sowohl die Häufigkeit als auch die Anzahl der Fehler. Obwohl er ein direktes Indiz für die technische Qualität einer gerade gespielten CD ist, erhält der Verbraucher keinen Aufschluß über gegebenenfalls notwendige Maßnahmen zum Verringern des Fehlergrades, da zwar die Häufigkeit und Anzahl der Fehler, jedoch nicht die Art des Fehlers signalisiert wird. Die Fehlerartsignalisierung erfordert somit ein in der Komplexität über den Fehlergrad hinausgehendes System. Es ist allgemein bekannt, derartige Systeme die den Menschen als Entscheidungsträger gewichteter komplexer Probleme unterstützen, als "Fuzzy Logic" zu bezeichnen.

Es ist weiterhin bekannt, daß bei der CD-Herstellung Laser-Scanner zur optischen Inspektion der Informationsträger verwendet werden, die einen hohen Aufwand erfordern und mit denen im Rahmen einer Gütekontrolle mit einem automatischen Prüfsystem eine Gut/Schlecht-Sortierung der CDs erfolgt, vgl. ,,Wenn es klickt, nicht gleich den Spieler schelten", in:
Frankfurter Allgemeine Zeitung vom 07.01.1992. Als Prüfkriterium dient ebenfalls der Fehlergrad, der die Anzahl der Störereignisse auf der Platte repräsentiert. Ein derartig aufwendiges System zur Fehlersignalisierung des optischen Informationsträgers in Form eines Zusatzgerätes ist dem Verbraucher jedoch nicht zuzumuten. Es sei erwähnt, daß mit diesen Einrichtungen auch keine Unterscheidung zwischen den unterschiedlichen Fehlerarten erfolgen kann.

Weiterhin ist ein Verfahren zur Fehlerermittlung bei auf scheibenförmigen, rotierenden Informationsträgern in Spiralspuren gespeicherten Signalen bekannt, bei dem ein Fehlersignal durch Vergleich mit dem Signal inhalt vorgehender Umdrehungen in der Weise identifiziert wird, daß bei einer Wiederholung des Fehlersignals in der nächstfolgenden Umdrehungen eine Schramme und ohne Wiederholung ein Einzelfehler registriert wird, vgl. DE-OS 28 51 822. Zur Durchführung des Verfahrens ist ein Schieberegister von der Länge einer Umdrehung vorgesehen. Räumlich begrenzte Fehler werden auf irgendeine spezifische Weise elektronisch gefunden und als Impulssignal an den Eingang der Einrichtung gegeben. Das Verfahren beruht darauf, daß ein Fehlersignal mit dem Signalinhalt vorhergehender Umdrehungen verglichen wird. Es wird eine Wiederholung des Fehlersignals in radialer Richtung am gleichen Ort in der nächsten Umdrehung mit einem Schieberegister registriert. Dadurch führen nur Fehler bzw. Fehlersignale, die auf einer gradlinig radial verlaufenden Linie des Aufzeichnungsträgers auftreten, zum Signalisieren einer Schramme. Die Tatsache, daß Schrammen oder Kratzer jedoch einen Verlauf aufweisen, der in aller Regel nicht mit einer geradlinig radial verlaufenden Linie übereinstimmt, wird nicht berücksichtigt. Das elektronische Fehlersignal wird in ein Schieberegister mit einer Länge von exakt einem Umlauf eingeschrieben, so daß nur auf einer geraden Radiallinie befindliche Orte erfaßt werden.
Zur Ortsbestimmung wird ein bei Abspielgeräten für scheibenförmige, rotierende Informationsträger unüblicher, starr an der Antriebsachse des Informationsträgers angebrachter Impulsgeber verwendet.
Aus der GB-A-2 137 799 ist ein Schmutzerkennungs- und Anzeigesystem für Informationsauslesesysteme bekannt. Hierbei wird eine abnormale Bedingung des Auslesesignals detektiert und angezeigt. Allerdings kann auch mit diesem bekannten System nur allgemein auf das Vorhandensein eines Fehlers hingewiesen werden; eine Aussage über die Fehlerart ist nicht möglich.
Die US-A-4,287,587 zeigt einen Detektor für ein Videodisk-Abspielsystem, welcher ein von der Videodisk erhaltenes Signal dahingehend prüft, ob dessen Amplitude mit zunehmender Spielzeit abnimmt. Eine Aussage über die Fehlerart des Fehlers der Videodisk ist nicht möglich.
Gemäß EP-A-73 519 ist ein optischer Plattenspieler bekannt, der eine Fehlerkorrektureinrichtung für die vom Informationsträger gelesenen Daten aufweist und ein der Anzahl korrigierter Bitwörter entsprechendes Signal abgibt. Sofern eine Korrektur der Bitwörter nicht mehr möglich ist wird angezeigt, daß der Aufzeichnungsträger gewechselt oder wenigstens gesäubert werden sollte. Eine Unterscheidung, ob es sich um eine Störung durch Fingerabdrücke oder einen Flächenfehler handelt, ist nicht möglich.

Der Erfindung liegt deshalb die Aufgabe zugrunde, ein Verfahren und eine Anordnung zu schaffen, die mit geringem Aufwand das Signalisieren mindestens einer Fehlerart eines optischen Aufzeichnungsträgers, wie beispielsweise Fingerabdrücke, mit einem Wiedergabegerät ermöglicht, so daß dem Verbraucher mit dem Beratungs- beziehungsweise Signalisiersystem das Beurteilen der Qualität des optischen Aufzeichnungsträgers erleichtert und ein Hinweis zum Erreichen einer besseren Wiedergabequalität beim Vorliegen der Fehlerursache Fingerabdruck gegeben wird.

Die gestellte Aufgabe wird erfindungsgemäß dadurch gelöst, daß in einem ersten Verfahrensschritt mindestens eine Fehlerursache beziehungsweise Fehlerart ermittelt und in einem zweiten Verfahrensschritt signalisiert beziehungsweise angezeigt wird.

Sofern der gerade abgespielte optische Informationsträger einen Fehler aufweist, wird explizit mindestens eine Fehlerursache angezeigt, so daß der Verbraucher im Fall der Fehlerursache Fingerabdruck durch einfaches Abwischen der Fingerabdrücke, vorzugsweise geradlinig von der Mitte zum Rand, die ursprüngliche Wiedergabequalität wieder herstellen kann.

Ausgangspunkt des Verfahrens bildet der optische Informationsträger, der insbesondere durch mehrfache und fahrlässige Handhabung zunehmend Fehler aufweist und mit einem üblicher weise zur Wiedergabe der Informationen verwendeten Abspielgerät optisch abgetastet wird.

Aufgrund der örtlichen Charakteristik, die die Fehlerursachen aufweisen, wird zum Ermitteln der Fehlerursache aus dem Fehlergrad eine den Fehlergrad einer optischen Platte repräsentierende Anzahl fehlerhafter Frames, die vom Decoder nicht mehr korrigiert wird, in Beziehung zum Fehlerort gesetzt, wobei der Fehlerort aus der Anzahl der Subcodeblöcke zwischen entsprechend der Fehlerrate bewerteten Fehlerpaketen ermittelt werden kann. Die Fehlerursache wird dadurch mit einer in benachbarten Spuren eines Plattensektors auftretenden Fehlerrate bestimmt.

Vorzugsweise wird die reparable Fehlerursache Finderabdruck beim Auftreten von mehr als drei Fehlerpaketen in fünf benachbarten Spuren angezeigt. Andererseits werden Kratzer und sogenannte Black- Dots vorzugsweise beim Auftreten von bis zu drei Fehlerpaketen in drei benachbarten Spuren identifiziert beziehungsweise als Fehlerursache ermittelt und signalisiert.

Darüber hinaus ist es sowohl mit der vom Fehlergrad als auch mit einer vom Hochfrequenzsignal ausgehenden Lösung durch Variieren der Parameter und gegebenenfalls Kombination der Lösungen möglich, unterschiedliche Fehlerursachen zu ermittelt und eine Wichtung des Grades der Fehlerursache oder Fehlerursachen vorzunehmen. Dem Verbraucher wird beispielsweise signalisiert, ob es sich um leichte Fingerabdrücke, starke Fingerabdrücke oder um eine hörbar durch Fingerabdrücke oder eine andere Fehlerursache gestörte Wiedergabe handelt.

Um den Grad der Sicherheit der Identifikation von Fingerabdrücken gegenüber anderen Störungen zu erhöhen, wird das Fehler repräsentierende Signal vorzugsweise mit einem dem Plattenumlauf äquivalenten Signal verknüpft. Dadurch wird vermieden, daß sich mehrere kurze Störungen, die nicht von Fingerabdrücken herrühren, zu einem dem Signal Fingerabdruck entsprechenden Signal addieren. Das dem Plattenumlauf äquivalente Signal ist vorzugsweise das Ausgangssignal des sogenannten Radial-Detektors. Weiterhin ist es vorteilhaft den Vorgang der Summierung einer festgelegten Anzahl von Track-Absolvierungen zum Detektieren der radialen Ausdehnung von Fingerabdrücken nicht bereits abzubrechen, wenn im Rahmen der Zählung ein einzelner Track-Umlauf frei von Störsignalen ist.

Das Anzeigen einer Fehlerursache oder mehrerer Fehlerursachen erfolgt visuell und/oder akustisch. Um zu gewährleisten, daß der Bedienende die Fehleranzeige wahrnimmt, wird die Fehlerursache auch über den Zeitraum ihres Auftretens hinausgehend signalisiert.

Zur Durchführung des Verfahrens ist eine Anordnung vorgesehen, die aus einer Verarbeitungsschaltung zur Verarbeitung Fehler eines optischen Informationsträgers repräsentierender Signale des Abspielgerätes und zur Zuführung zu einer Anzeigevorrichtung für mindestens eine Fehlerursache besteht.

Eine Verarbeitungsschaltung, die der Verarbeitung den Fehlergrad eines optischen Informationsträgers repräsentierender Signale dient, wird vorzugsweise am Decoder bzw. Program-Error-Counter des Abspielgerätes angeschlossen und von einer fehlerhafte Frames in Beziehung zum Fehlerort setzenden Recheneinheit gebildet.

Unabhängig vom Aufbau der Verarbeitungsschaltung, mit der mindestens eine Fehlerursache ermittelt wird, ist eine visuell und/oder akustisch signalisierende Anzeigevorrichtung vorgesehen, die aus einer oder mehreren Leuchtdioden, einem Display oder Anzeigefeldern oder einer ein oder mehrere Tonsignale erzeugenden Tonrufeinrichtung besteht. Mit der Anzeigevorrichtung werden vorzugsweise reparable Fehlerursachen oder auch reparable und/oder irreparable Fehlerursachen angezeigt.

Hinsichtlich der Gerätegestaltung werden die Anzeigevorrichtung und die Verarbeitungsschaltung zu einem Fehleranzeigegerät zusammengefügt, welches als separates Fehleranzeigegerät mit dem Abspielgerät verbunden ist oder das Fehleranzeigegerät ist im Abspielgerät integriert und bildet mit diesem eine bauliche Einheit.

Die Vorteile des Verfahrens und der Anordnung bestehen insbesondere darin, daß dem Betreiber des Abspielgerätes das Beurteilen der Wiedergabequalität eines optischen Informationsträgers erleichtert wird, hierzu im Abspielgerät vorhandene Einrichtungen und bereits realisierte Verfahrensschritte verwendet werden können und der Verbraucher eine explizite Information über gegebenenfalls vorhandene Fehlerursachen des gerade abgespielten optischen Informationsträgers erhält, die es ihm im Fall von Fingerabdrücken ermöglicht, durch einfaches Abwischen die ursprüngliche Wiedergabequalität des optischen Informationsträgers wieder herzustellen.

Das Verfahren und die Anordnung sind mit geringem Aufwand realisierbar und der Verbraucher erhält Aufschlüsse darüber, ob ursprüngliche oder wesentlich mit einem Korrektursystem berechnete beziehungsweise interpolierte Informationen wiedergegeben werden.

Das Verfahren und die Anordnung sind in den Ansprüche 1 und 5 definiert.

Im folgenden wird die Erfindung anhand einen Ausführungsweg darstellenden Zeichnungen näher erläutert.

Es zeigen
- Fig. 1: ein Blockschaltbild zur Durchführung des Verfahrens zur Fehlerartsignalisation optischer
Informationsträger mit einem Abspielgerät 1,
- Fig. 2: ein Flußdiagramm zum vom Fehlergrad ausgehenden Verfahren der Fehlerartanzeige,
- Fig. 3: ein Blockschaltbild einer Anordnung zur vom Fehlergrad ausgehenden Fehlerartanzeige.

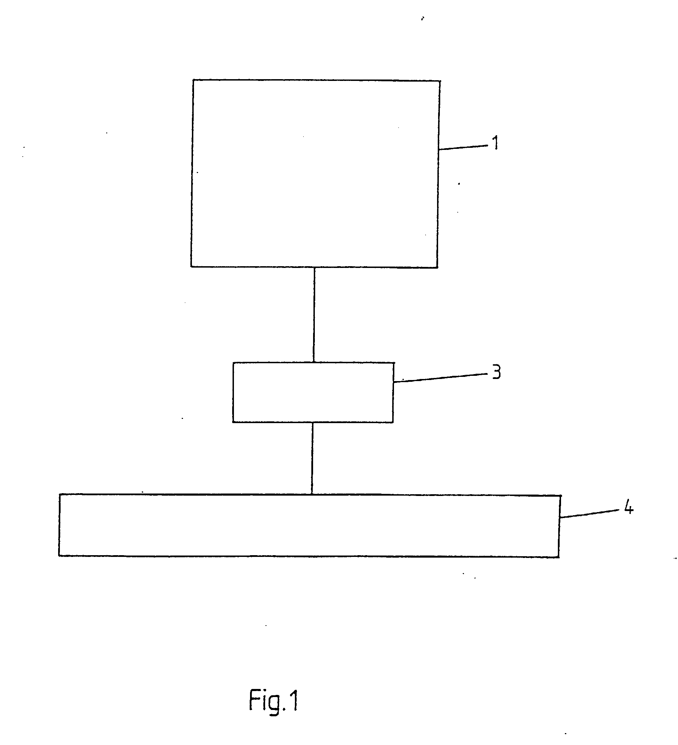

Fig. 1 entsprechend wird das Verfahren zur Fehlerartsignalisation optischer Informationsträger mit einem Abspielgerät 1, mit dem im ersten Verfahrensschritt mindestens eine Fehlerursache ermittelt und im zweiten Verfahrensschritt angezeigt wird, mit einer Verarbeitungsschaltung 3 und einer Anzeigevorrichtung 4 durchgeführt.

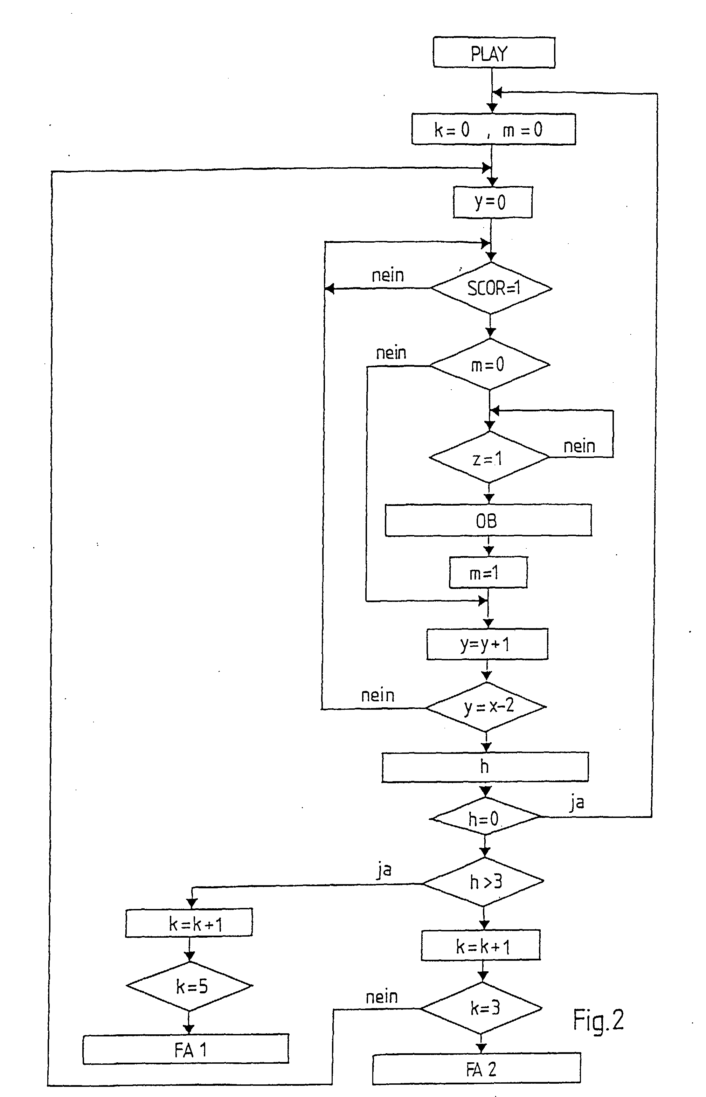

In einem ersten Ausführungsweg zur Fehlerartsignalisation einer Compact Disc besteht der erste Verfahrensschritt darin, daß aus dem Fehlergrad, den ein in Fig. 1 nicht dargestellter Decoder 2 des Abspielgerätes 1 bereitstellt, mindestens eine Fehlerursache ermittelt wird. Zum Ermitteln von Fehlerursachen aus dem Fehlergrad eines optischen Aufzeichnungsträgers werden Fig. 2 entsprechend mit dem Start des Abspielgerätes PLAY zunächst die Anzahl der hinsichtlich des Auftretens von Fehlern zu untersuchenden Spuren k sowie ein eine Fehlerrate z darstellendes Flag m Null gesetzt. Auch die Zahl der Subcodeblöcke y wird beim Start des Abspielgerätes PLAY gleich Null gesetzt. Mit dem Auftreten des ersten Subcode-Synchronsignals SCOR wird im Signalflußverlauf weitergeschaltet. Das die Fehlerrate z darstellende Flag m wird gesetzt, wenn erstmalig eine Interpolation auftritt, deren Vorliegen analog zur Fehlerrate z von den, den Fehlergrad der optischen Platte signalisierenden Einrichtungen des Abspielgerätes abgeleitet wird. Tritt eine Fehlerrate z = 1 auf, wird durch Berechnung der Zahl der Subcodeblöcke y je Umdrehung x eine Ortsbestimmung OB durchgeführt. Die Zahl der Subcodeblöcke y je Umdrehung x ergibt sich aus dem Abtastdurchmesser, der aus dem sogenannten Subcode ATIME berechnet wird, multipliziert mit der Zahl, dividiert durch das Produkt aus Subcodeblockzeit und Abtastgeschwindigkeit. Die Abtastgeschwindigkeit ist in bekannter Weise für jede Platte nur einmal zu bestimmen und die Zahl der Subcodeblöcke y je Umdrehung x wird vorzugsweise als ganze Zahl abgerundet. Weiterhin wird das die Fehlerrate z darstellende Flag m gleich Eins gesetzt und anschließend durch Erhöhen der Zahl der Subcodeblöcke y um Eins abgewartet, ob im gleichen Plattensektor erneut eine Fehlerrate z auftritt. Außerdem wird in einem folgenden Schritt die Ungenauigkeit von zwei Subcodeblöcken y berücksichtigt. Dem schließt sich eine Bewertung fehlerhafter Frames in Fehlerpaketen h an. Entsprechend experimenteller Ergebnisse wurde eine auf vier Frames innerhalb einer 96 Frames entsprechenden Subcodeblockzeit bezogene Größe der Fehlerpakete h gewählt, um in Kombination mit einer hinsichtlich des Auftretens von Fehlern zu untersuchenden Anzahl von Spuren k eine Unterscheidung zwischen den Fehlerursachen Fingerabdruck und Kratzer, Black-Dot zu ermöglichen. Es hat sich gezeigt, daß die reparable Fehlerursache Fingerabdruck als erste Fehlerart FA1 beim Auftreten von mehr als drei Fehlerpaketen h in fünf benachbarten Spuren k vorliegt. Andererseits werden Kratzer und Black-Dots als zweite Fehlerart FA2 beim Auftreten von bis zu drei Fehlerpaketen h in drei benachbarten Spuren k identifiziert.

Um den Grad der Sicherheit der Identifikation von Fingerabdrücken gegenüber anderen Störungen zu erhöhen, wird das Fehler repräsentierende Signal mit einem dem Plattenumlauf äquaivalenten Signal verknüpft. Dadurch wird vermieden, daß sich mehrere kurze Störungen, die nicht von Fingerabdrücken herrühren, zu einem Fingerabdruck entsprechenden Signal addieren. Als einem Plattenumlauf äquivalentes Signal wird vorzugsweise das Ausgangssignal des sogenannten Radial-Detektors verwendet. Anderseits ist es vorteilhaft, den Vorgang der Summierung einer festgelegten Anzahl von Track-Absolvierungen entsprechend der Plattenumläufe zum Detektieren der radialen Ausdehnung von Fingerabdrücken nicht bereits abzubrechen, wenn im Rahmen der Zählung ein einzelner Track-Umlauf frei von Störsignalen ist.

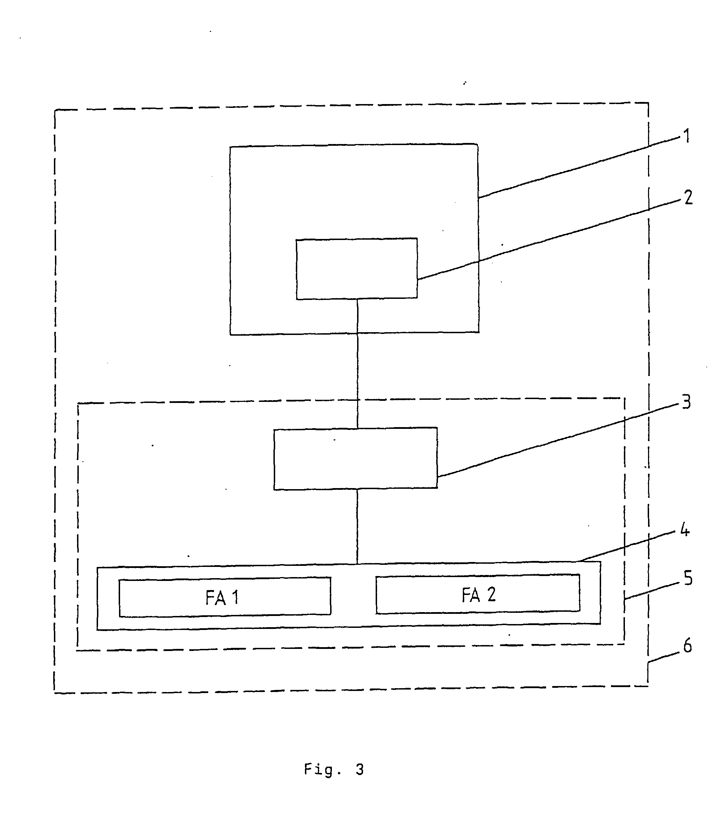

Eine diesem Ausführungsweg entsprechende Anordnung ist in Fig. 3 dargestellt. Sie besteht aus dem Abspielgerät 1, das einen den Fehlergrad der optischen Platte signalisierenden Decoder 2 enthält, einer Verarbeitungsschaltung 3 und einer Anzeigevorrichtung 4. Am Decoder 2 ist die Verarbeitungsschaltung 3 angeschlossen, mit der die den Fehlergrad der gerade gespielten optischen Platte repräsentierenden Signale verarbeitet werden. Sie ist eine Recheneinheit, mit der fehlerhafte Frames im Beziehung zum Fehlerort gesetzt werden. Im Ergebnis der Berechnung wird eine der gegebenenfalls vorliegenden Fehlerursachen Fingerabdruck oder Kratzer, Black-Dot ermittelt und ein diesbezügliches Signal zu der an der Verarbeitungsschaltung 3 angeschlossenen Anzeigevorrichtung 4 weitergeleitet, die die entsprechende Fehlerursache mittels Display als erste Fehlerart FA1 beziehungsweise zweite Fehlerart FA2 signalisiert.

Unabhängig vom Ausführungsweg des ersten Verfahrensschrittes wird dann mit der bereits erwähnten Anzeigevorrichtung 4 in einem zweiten Verfahrensschritt mindestens eine Fehlerursache signalisiert.

Eine Verarbeitungsschaltung 3 und eine Anzeigevorrichtung 4 können Figur 3 entsprechend mit dem Abspielgerät 1 zu einer baulichen Einheit 6 zusammengefaßt sein.

## Patentansprüche

1. Verfahren zum Signalisieren mindestens einer Fehlerursache optisch abtastbarer Informationsträger beziehungsweise optischer Platten, wie beispielsweise Fingerabdrücke und/oder Kratzer, in einem zur Wiedergabe der Informationen eines optischen Informationsträgers verwendeten Abspielgerät (1) durch Vergleich einer in benachbarten Spuren (k) eines Plattensektors einer Compact Disc auftretenden Fehlerrate (z) mit vorgegebenen Grenzwerten, wobei beim ersten Auftreten eines Fehlerpaketes (h), das beim Auftreten einer Fehlerrate (z) von einer Mehrzahl fehlerhafter Frame innerhalb einer einer Vielzahl Frame entsprechenden Subcodeblockzeit (y) gebildet wird, verglichen wird, ob nach mindestens einem Umlauf im Bereich des Ortes des Auftretens erster Fehlerpakete (h) ebenfalls Fehlerpakete (h) auftreten und beim Auftreten von mehr als einer vorgegebenen Mehrzahl entsprechenden Anzahl von Fehlerpaketen (h) in einer einer vorgegebenen Mehrzahl entsprechenden Anzahl benachbarter Spuren (k) mindestens die Fehlerursache Fingerabdruck ermittelt und signalisiert wird.

2. Verfahren nach Anspruch 1, dadurch gekennzeichnet, daß die Anzahl der Subcodeblöcke (y) aus dem Abtastdurchmesser, der aus dem Subcode (ATIME) berechnet wird, multipliziert mit der Zahl π, dividiert durch das Produkt aus Subcodeblockzeit und Abtastgeschwindigkeit, bestimmt wird.

3. Verfahren nach Anspruch 1, dadurch gekennzeichnet, daß ein Fehlerpaket (h) beim Auftreten einer Fehlerrate (z) von vier fehlerhaften Frame innerhalb einer 96 Frame entsprechenden Subcodeblockzeit (y) gebildet wird und verglichen wird, ob nach mindestens einem Umlauf im Bereich des Ortes des Auftretens erster Fehlerpakete (h) ebenfalls Fehlerpakete (h) auftreten und beim Auftreten von mehr als drei Fehlerpaketen (h) in fünf benachbarten Spuren (k) die Fehlerursache Fingerabdruck ermittelt wird.

4. Verfahren nach einem der Ansprüche 1 bis 3, dadurch gekennzeichnet, daß mindestens eine Fehlerursache visuell und/oder akustisch über den unmittelbaren Zeitraum ihres Auftretens hinausgehend bis zum erneuten Einlegen einer optischen Platte oder eines Magazins optischer Platten signalisiert wird.

5. Anordnung zum Signalisieren mindestens einer Fehlerursache optisch abtastbarer Informationsträger beziehungsweise optischer Platten, wie beispielsweise Fingerabdrücke und/oder Kratzer, durch Vergleich der Orte des Auftretens eines Fehlersignals in einem zur Wiedergabe der Informationen verwendeten Abspielgerät (1) mit einer Verarbeitungsschaltung (3) zur Verarbeitung Fehler repräsentierender Signale eines optischen Informationsträgers und zur Zuführung zu einer Anzeigevorrichtung (4) für mindestens eine Fehlerursache Fingerabdruck, wobei die Verarbeitungsschaltung (3) eine an einem Decoder (2) des Abspielgerätes (1) angeschlossene, fehlerhafte Frame in Beziehung zu einem aus Subcodeblöcken (y) berechneten Fehlerort setzenden Recheneinheit ist, mit der aus einer in benachbarten Spuren (k) eines Plattensektors auftretenden Fehlerrate (z) durch Vergleich mit vorgegebenen Grenzwerten von einer Compact Disc mindestens eine Fehlerursache Fingerabdruck aus einer in benachbarten Spuren (k) eines Plattensektors auftretenden Fehlerrate (z) ermittelt wird, indem beim ersten Auftreten eines Fehlerpaketes (h), das beim Auftreten einer Fehlerrate (z) von einer Mehrzahl fehlerhafter Frame innerhalb einer einer Vielzahl Frame entsprechenden Subcodeblockzeit (y) gebildet wird, verglichen wird, ob nach mindestens einem Umlauf im Bereich des Ortes des Auftretens erster Fehlerpakete (h) ebenfalls Fehlerpakete (h) auftreten und beim Auftreten von mehr als einer vorgegebenen Mehrzahl entsprechenden Anzahl von Fehlerpaketen (h) in einer einer vorgegebenen Mehrzahl entsprechenden Anzahl benachbarter Spuren (k) mindestens die Fehlerursache Fingerabdruck ermittelt wird und die Verarbeitungsschaltung (3) mit der Anzeigevorrichtung (4) verbunden ist.

6. Anordnung nach Anspruch 5, dadurch gekennzeichnet, daß mit der Recheneinheit ein Fehlerpaket (h) beim Auftreten einer Fehlerrate (z) von vier fehlerhaften Frame innerhalb einer 96 Frame entsprechenden Subcodeblockzeit (y) gebildet wird und verglichen wird, ob nach mindestens einem Umlauf im Bereich des Ortes des Auftretens erster Fehlerpakete (h) ebenfalls Fehlerpakete (h) in fünf benachbarten Spuren (k) die Fehlerursache Fingerabdruck ermittelt wird.

## Claims

1. Method for signalling at least one cause of error on optically scanned information media or, respectively, optical disks, such as fingerprints and/or pits for example, in a playback device (1) which is used for reproducing information from an optical information medium, by comparison with an error rate (z) occurring in neighbouring tracks (k) of a disk sector of a compact disk and having predetermined limit values where, when an error burst (h) first occurs, which is formed on the occurrence of an error rate (z) from a plurality of defective frames within a subcode block time (y) corresponding to a multiplicity of frames, a comparison takes place as to whether error bursts (h) also occur in the area of the location of the occurrence of first error bursts (h) after at least one revolution and, when more than a predetermined number, corresponding to a plurality, of error bursts (h) occur in a predetermined number, corresponding to a plurality, of neighbouring tracks (k), at least the cause of error "fingerprint" is determined and signalled.

2. Method according to Claim 1, characterized in that the number of the subcode blocks (y) is determined from the scanning diameter, which is calculated from the subcode (ATIME), multiplied by the number π, divided by the product of the subcode block time and scanning rate.

3. Method according to Claim 1, characterized in that an error burst (h) is formed on the occurrence of an error rate (z) of four defective frames within a subcode block time (y) corresponding to 96 frames and a comparison takes place as to whether error bursts (h) also occur in the area of the location of the occurrence of first error bursts (h) after at least one revolution and, when more than three error bursts (h) occur in five neighbouring tracks (k), the cause of error "fingerprint" is determined.

4. Method according to one of Claims 1 to 3, characterized in that at least one cause of error is signalled visually and/or acoustically beyond the immediate duration of its occurrence until an optical disk or a magazine of optical disks is inserted again.

5. Arrangement for signalling at least one cause of error of optically scanned information media or optical disks, such as fingerprints and/or pits for example, by comparison of the locations of the occurrence of an error signal, having in a playback device (1) which is used for reproducing information a processing circuit (3) for processing signals, which represent errors, from an optical information medium and for feeding to a display device (4) for at least one cause of error "fingerprint", the processing circuit (3) being a computing unit which is connected to a decoder (2) of the playback device (1) and relates defective frames to a defect location which is calculated from subcode blocks (y), by means of which computing unit at least one cause of error "fingerprint" is determined from an error rate (z) occurring in neighbouring tracks (k) of a disk sector by comparison with predetermined limit values of a compact disk, in that, when an error burst (h) first occurs which is formed on the occurrence of an error rate (z) from a plurality of defective frames within a subcode block time (y) corresponding to a multiplicity of frames, a comparison takes place as to whether error bursts (h) also occur in the area of the location of the occurrence of first error bursts (h) after at least one revolution and, when more than a predetermined number, corresponding to a plurality, of error bursts (h) occur in a predetermined number, corresponding to a plurality, of neighbouring tracks (k), at least the cause of error "fingerprint" is determined and the processing circuit (3) is connected to the display device (4).

6. Arrangement according to Claim 5, characterized in that, using the computing unit, an error burst (h) is formed when an error rate (z) of four defective frames occurs within a subcode block time (y) corresponding to 96 frames, and a comparison takes place as to whether error bursts (h) also [lacuna], after at least one revolution, in the area of the location of the occurrence of first error bursts (h) in five neighbouring tracks (k), the cause of error "fingerprint" is determined [sic].

## Revendications

1. Procédé pour la signalisation d'au moins un défaut d'un support d'information balayable ou de disques optiques, par exemple les traces de doigts et/ou les salissures, dans un appareil de lecture (1) utilisé pour reproduire les informations d'un support d'information optique en comparant un taux de défauts (z) apparaissant dans des pistes voisines (k) d'un secteur d'un disque compact avec des valeurs limites prédéfinies, où, lors de l'apparition d'un paquet de défauts (h), constitué, lors de l'apparition d'un taux de défauts (z), de la plupart des unités défectueuses figurant dans un temps de bloc de sous-code (y), l'on compare si, après au moins un tour, des paquets de défauts (h) apparaissent également à l'emplacement où les premiers paquets de défauts (h) sont apparus, et où, lors de l'apparition d'un nombre de paquets de défauts plus élevé que la limite prédéfinie dans une quantité de pistes voisines (k) correspondant à une limite prédéfinie, au moins le défaut relatif aux traces de doigts est recherché et signalé.

2. Procédé conforme à la revendication 1, **caractérisé en ce que** le nombre de blocs de sous-code (y) est déterminé à partir du diamètre de balayage lui-même calculé à partir du sous-code (ATIME), multiplié par le nombre π, divisé par le produit entre le temps des blocs de sous-code et la vitesse de balayage.

3. Procédé conforme à la revendication 1, **caractérisé en ce qu**'un paquet de défauts (h) est constitué, lors de l'apparition d'un taux de défauts (z), de quatre unités défectueuses dans un temps de bloc de sous-code (y) correspondant à 96 unités et est comparé pour savoir si, après au moins un tour, des paquets de défauts (h) apparaissent également à l'emplacement où les premiers paquets de défauts (h) sont apparus, et si, lors de l'apparition de plus de trois paquets de défauts (h) dans cinq pistes voisines (k), le défaut relatif aux traces de doigts est recherché.

4. Procédé conforme à l'une des revendications 1 à 3, **caractérisé en ce que** le dispositif indicateur fournit un signal visuel et/ou acoustique dès l'apparition d'au moins un défaut, jusqu'à la mise en place d'un nouveau disque optique ou d'un nouveau chargeur.

5. Aménagement pour la signalisation d'au moins un défaut d'un support d'information balayé optiquement ou de disques optiques, comme les traces de doigts et/ou les salissures sur un disque compact en comparant les emplacements où apparaît un signal de défaut dans un appareil de lecture (1) utilisé pour reproduire les informations avec un circuit (3) servant au traitement des signaux de l'appareil de lecture qui représentent les défauts d'un support d'information optique et à l'acheminement vers un dispositif indicateur (4), pour au moins un défaut relatif aux traces de doigts, où le circuit de traitement (3) est un compteur, relié à un décodeur (2) de l'appareil de lecture qui détermine les unités défectueuses par rapport à un emplacement calculé à partir de blocs de sous-code (y), grâce auquel au moins un défaut, relatif aux traces de doigts, est recherché à partir d'un taux de défauts (z) apparaissant dans des pistes voisines (k) d'un secteur de disque en effectuant une comparaison avec les valeurs limites prédéfinies d'un disque compact, où, lors de l'apparition d'un paquet de défauts (h), constitué, lors de l'apparition d'un taux de défauts (z), de la plupart des unités défectueuses figurant dans un temps de bloc de sous-code (y), l'on compare si, après au moins un tour, des paquets de défauts (h) apparaissent également à l'emplacement où les premiers paquets de défauts (h) sont apparus, et où, lors de l'apparition d'un nombre de paquets de défauts plus élevé que la limite prédéfinie dans une quantité de pistes voisines (k) correspondant à une limite prédéfinie, au moins le défaut relatif aux traces de doigts est recherché et le circuit de traitement (4) est relié au dispositif indicateur.

6. Aménagement conforme à la revendication 5, **caractérisé en ce qu**'un paquet de défauts (h) est constitué, lors de l'apparition d'un taux de défauts (z), de quatre unités défectueuses dans un temps de bloc de sous-code (y) correspondant à 96 unités et est comparé pour savoir si le défaut relatif aux traces de doigts est recherché par le compteur, après au moins un tour, à l'emplacement où des paquets de défauts (h) apparaissent également où les premiers paquets de défauts (h) sont apparus dans cinq pistes voisines (k).
